# EUROPÄISCHE PATENTSCHRIFT

(11) **EP 1 946 287 B1**
(45) Veröffentlichungstag und Bekanntmachung des Hinweises auf die Patenterteilung: **20.01.2010**
(21) Anmeldenummer: 06804371.0
(22) Anmeldetag: 27.10.2006
(51) Int. Cl.: G09F 15/00, G09F 15/02, G09F 7/00, G09F 19/22

(54) **WERBETAFEL**
BILLBOARD
PANNEAU PUBLICITAIRE

(30) Priorität: 08.11.2005 AT 18162005
(43) Veröffentlichungstag der Anmeldung: 23.07.2008
(73) Patentinhaber: Science in Motion GmbH & Co. KG, 2314 Luxembourg (LU)
(72) Erfinder: OHLINGER, Otmar, 4780 Schärding am Inn (AT); MORASCH, Ludwig, 98000 Monaco (MC)
(74) Vertreter: Blodig, Wolfgang
(86) Internationale Anmeldenummer: PCT/AT2006/000443
(87) Internationale Veröffentlichungsnummer: WO 2007/053863

(56) Entgegenhaltungen:
- EP-A1- 1 147 911
- WO-A-01/26894
- DE-U1- 20 116 432

## Beschreibung

### Technisches Gebiet

Die Erfindung bezieht sich auf eine Werbetafel mit einer selbsttragenden, nichtbrennbaren Platte, die eine Trägerschicht für unter ultraviolettem Licht härtende Druckfarben aufweist.

Die Werbetafel gemäß dem Oberbegriff des Anspruchs 1 ist aus EP 1147911 bekannt.

### Stand der Technik

Herkömmliche Werbetafeln weisen eine selbsttragende Platte üblicherweise aus einem Holzwerkstoff auf, auf die Plakate geklebt werden. Solche Werbetafeln müssen allerdings als brennbar eingestuft werden und dürfen daher nicht in Räumen mit einer Brandschutzklasse eingesetzt werden, die die Verwendung brennbarer Einrichtungsgegenstände untersagt. Daran ändert sich auch nichts, wenn die selbsttragende Platte aus einem nichtbrennbaren Werkstoff, beispielsweise Metall oder Glas besteht, weil die auf die nichtbrennbare Platte aufkaschierte, bedruckte Folie zusammen mit der Klebemittelschicht zwischen der bedruckten Folie und der nichtbrennbaren Platte einen Verbundkörper ergibt, der nicht im Sinne der Brandschutzklassen als nichtbrennbar eingestuft werden kann. Abgesehen davon sind größere Werbetafeln mit tragenden Platten aus Metall oder Glas bauakustisch nachteilig.

### Darstellung der Erfindung

Der Erfindung liegt somit die Aufgabe zugrunde, diese Nachteile zu vermeiden und eine Werbetafel der eingangs geschilderten Art so auszugestalten, daß mit einem vergleichsweise geringem Aufwand die Anforderungen hinsichtlich der Nichtbrennbarkeit erfüllt werden können, ohne auf ein detailreiches Druckbild verzichten zu müssen.

Die Erfindung löst die gestellte Aufgabe dadurch, daß die Platte aus Faserzement hergestellt und mit einer unmittelbar aufgebrachten, gegebenenfalls Farbpigmente enthaltenden Acrylatbeschichtung als Trägerschicht für Druckfarben auf Acrylbasis versehen ist.

Durch den Einsatz von Faserzement als Werkstoff für die selbsttragende Platte werden zunächst vorteilhafte bauakustische Verhältnisse sichergestellt, insbesondere bei einer hinterlüfteten Anbringung der Platten an einer Wand. Außerdem sind solche Platten aus Faserzement feuchtigkeitsresistent, was bei der Anordnung von Werbetafeln in Feuchträumen, wie sie öffentliche Garagen im allgemeinen sind, von besonderer Bedeutung ist. Um die Nichtbrennbarkeit einer Werbetafel mit einer solchen selbsttragenden Platte aus Faserzement nicht durch eine aufkaschierte, bedruckte Folie aus Kunststoff oder Papier zu gefährden, wird auf eine solche Folie verzichtet. Da aber Platten aus Faserzement wegen der unzureichenden Haftung der Druckfarben auf dem Zementwerkstoff nicht unmittelbar bedruckt werden können, wird die Sichtseite der Platte mit einer Acrylatbeschichtung versehen, die als Trägerschicht für die Druckfarben dient. Der Umstand, daß unter ultraviolettem Licht härtende Druckfarben auf Acrylbasis zum Einsatz kommen, stellt eine dauerhafte, abriebfeste Verbindung zwischen der Acrylatbeschichtung der Platte aus Faserzement und den Druckfarben ohne zusätzliche Bindemittel sicher, was eine wesentliche Voraussetzung für die Einstufung einer solchen Werbetafel als nichtbrennbar darstellt, obwohl weder die Acrylatbeschichtung noch die Druckfarben auf Acrylbasis die Brandschutzkriterien der Nichtbrennbarkeit für sich erfüllen. Es kann jedoch aufgrund der getroffenen Auswahl der Trägerschicht im Zusammenwirken mit den darauf abgestimmten Druckfarben die Gesamtdicke der Acrylatbeschichtung und der Druckfarben auf ein Maß beschränkt werden, das die Einstufung des Verbundkörpers aus Faserzement und Beschichtung als nichtbrennbar im Sinne einer Brandschutzklasse erlaubt. Da die tragende Platte aus Faserzement mit einer Acrylatbeschichtung versehen wird, ergibt sich ein vorteilhafter Druckuntergrund für Acrylfarben, die mit Hilfe eines Druckers auf die gereinigte Acrylatbeschichtung unmittelbar aufgesprüht und mit ultraviolettem Licht gehärtet werden können, und zwar bei einer hohen Detailtreue des Druckbildes, das eine photorealistische Bildqualität aufweisen kann. Gegebenenfalls ist die Acrylatbeschichtung mit Farbpigmenten zu versetzen, um eine bestimmte Untergrundfarbe vorgeben zu können.

Damit die Klassifizierung der Werbetafel als nichtbrennbar im Sinne der Brandschutzklassen gewährleistet werden kann, ist darauf zu achten, daß die auf eine Flächeneinheit der Platte bezogene Gesamtmenge der Acrylatbeschichtung und der auf die Acrylatbeschichtung aufgebrachten Druckfarben kleiner als die für die Nichtbrennbarkeit der Werbetafel zulässige Höchstmenge ist. Bei Schichtdicken der Acrylatbeschichtung und der Druckfarben von jeweils höchstens 0,1 mm können diese Bedingungen ohne weiteres erfüllt werden.

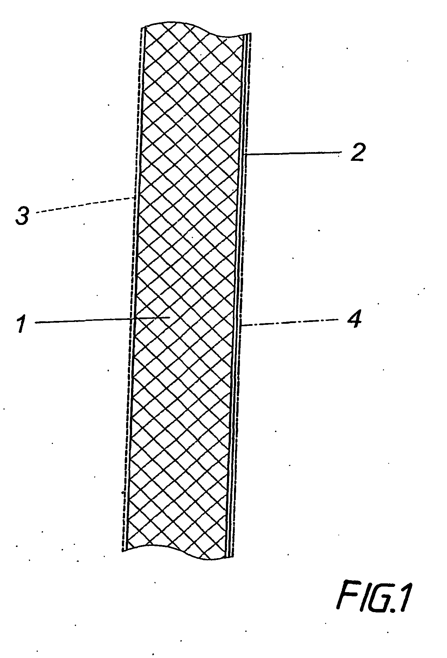

### Kurze Beschreibung der Zeichnung

In der Zeichnung ist der Erfindungsgegenstand beispielsweise dargestellt, und zwar wird eine erfindungsgemäße Werbetafel ausschnittsweise in einem Querschnitt gezeigt.

### Weg zur Ausführung der Erfindung

Die Werbetafel gemäß dem Ausführungsbeispiel weist eine selbsttragende Platte 1 aus Faserzement auf, die auf ihrer Sichtseite mit einer Acrylatbeschichtung 2 versehen ist. Die Rückseite kann ebenfalls eine Beschichtung 3 aufweisen, die allerdings so ausgeführt sein muß, daß die Nichtbrennbarkeit des Verbundkörpers im Sinne der Brandschutzklassen nicht in Frage gestellt wird. Auf die Acrylatbeschichtung 2, die gegebenenfalls mit Farbpigmenten versetzt ist, kann unmittelbar gedruckt werden, und zwar mit Hilfe eines Drukkers, der die Druckfarben entsprechend der Ansteuerung des Druckers digital auf die Acrylatbeschichtung 2 als Trägerschicht aufsprüht. Die auf die Acrylatbeschichtung 2 aufgesprühte Farbschicht 4 aus Acrylfarben wird während des Druckvorganges mit Hilfe von Strahlern für ultraviolettes Licht gehärtet, wobei sich eine dauerhafte Verbindung zwischen der Farbschicht 4 und der Acrylatbeschichtung 2 ergibt, ohne zusätzliche Bindemittel einsetzen zu müssen. Die Gesamtdicke der Acrylatbeschichtung 2 und der Farbschicht 4 auf Acrylbasis kann dabei ausreichend dünn gehalten werden, um den Verbundkörper als nichtbrennbar zu klassifizieren, obwohl weder die Acrylatbeschichtung 2 noch die Farbschicht 4 für sich als nichtbrennbar eingestuft werden können. Die geringe Schichtdicke der Acrylatbeschichtung 2 und der Farbschicht 4 beeinfluß außerdem die schalldämmenden Eigenschaften der Platte 1 aus Faserzement kaum, so daß sich vorteilhafte bauakustische Bedingungen beim Einsatz solcher Werbetafeln ergeben, insbesondere wenn diese großflächigen Tafeln mit einer Hinterlüflung an Wänden angebracht werden. Wegen der geringen Beschichtungsdicke und der Feuchtigkeitresistenz der Werbetafel kann auch die Gefahr von Spannungsrissen und Absplitterungen beispielsweise aufgrund von temperaturbedingten Spannungen oder Verformungen ausgeschlossen werden.

## Patentansprüche

1. Werbetafel mit einer selbsttragenden, nichtbrennbaren Platte, die eine Trägerschicht für unter ultraviolettem Licht härtende Druckfarben aufweist, **dadurch gekennzeichnet, daß** die Platte (1) aus Faserzement hergestellt und mit einer unmittelbar aufgebrachten, gegebenenfalls Farbpigmente enthaltenden Acrylatbeschichtung (2) als Trägerschicht für Druckfarben auf Acrylbasis versehen ist.

2. Werbetafel nach Anspruch 1, **dadurch gekennzeichnet, daß** die auf eine Flächeneinheit der Platte (1) bezogene Gesamtmenge der Acrylatbeschichtung (2) und der auf die Acrylatbeschichtung aufgebrachten Druckfarben kleiner als die für die Nichtbrennbarkeit der Werbetafel zulässige Höchstmenge ist,

3. Werbetafel nach Anspruch 1, ferner umfassend eine Farbschicht (4) auf Acrylbasis auf der Acrylatbeschichtung (2).

## Claims

1. Billboard having a self-supporting, non-combustible panel which has a base layer for printing inks that cure under ultraviolet light, **characterised in that** the panel (1) is produced from fibre cement and is provided with a directly applied acrylate coating (2), optionally containing colour pigments, as base layer for acrylic-based printing inks.

2. Billboard according to claim 1, **characterised in that** the total amount of the acrylate coating (2) and the printing inks applied to the acrylate coating, based on a unit area of the panel (1), is less than the maximum amount permissible for the non-combustibility of the billboard.

3. Billboard according to claim 1, further comprising an acrylic-based ink layer (4) on the acrylate coating (2).

## Revendications

1. Panneau publicitaire avec une plaque ininflammable autoporteuse qui présente une couche de substrat pour des encres d'impression durcissant à la lumière ultraviolette, **caractérisé en ce que** la plaque (1) est fabriquée en fibrociment et est pourvue, comme couche de substrat pour des encres d'impression à base acrylique, d'un revêtement d'acrylate (2) qui est appliqué directement et qui contient éventuellement des pigments colorants.

2. Panneau publicitaire selon la revendication 1, **caractérisé en ce que** la quantité totale du revêtement d'acrylate (2) et des encres d'impression appliquées sur celui-ci, ramenée à l'unité de surface de la plaque (1), est inférieure à la quantité maximale autorisée pour l'ininflammabilité du panneau publicitaire.

3. Panneau publicitaire selon la revendication 1, comprenant également une couche d'encre (4) à base acrylique sur le revêtement d'acrylate (2).
